# EUROPEAN PATENT APPLICATION

(11) **EP 4 240 042 A1**
(43) Date of publication of application: **06.09.2023**
(21) Application number: 22305230.9
(22) Date of filing: 01.03.2022
(51) Int. Cl.: H04W 12/30, H04W 4/70, H04W 48/16

(54) **SUBSCRIPTION SELECTION USING CENTRAL CLOUD INTELLIGENCE**

(71) Applicant: Telit Cinterion Deutschland GmbH, 81541 München (DE)
(72) Inventor: Jacques, SUIRE, 78220 VIROFLAY (FR)
(74) Representative: Pearl Cohen Zedek Latzer Baratz UK LLP

(57) **Abstract**

The present invention relates to a method to select appropriate subscription to be loaded in the eUICC of a device from an loT fleet among candidate subscriptions, said method comprising, for a central cloud intelligence, the steps of:
collecting teaching data related to MNO subscriptions and their associated favorite and forbidden PLMNs from on-field deployed devices and/or from in-lab devices hosting sample,
associating, in a database, those teaching data to candidate subscriptions,
said method further comprising the steps of:
receiving information relative to the radio environment of a device in need of a subscription,
processing received information relative to radio environment in regard to teaching data and candidate subscriptions available in the database,
determining among the candidate subscriptions an adapted subscription depending on this processing,
triggering the download of the determined subscription to the device in need of a subscription.

## Description

### FIELD OF THE INVENTION

The present invention relates to a method to select subscription to be loaded in an loT device among candidate subscription performed by a central cloud intelligence.

The invention also pertains to a central cloud intelligence implementing said method.

### BACKGROUND OF THE INVENTION

The invention addresses the situation where a business customer wants to load a subscription inside each on-field devices from a fleet of cellular loT devices. Such a situation can be performed either using bootstrap profile in case of initial provisioning or using an operational profile already preloaded in case of Mobile Network Operator (MNO) switch. This situation occurs typically when a service provider or an Original Equipment Manufacturer (OEM) is requested to select and download subscription to on-field devices, for example smart meters.

In such situations, customers may face subscription download mistakes. It drives extra-costs and service outage/degraded for concerned devices. Biggest the volume of the loT device fleet is, highest the cost impact could be.

For fleets of metering or of very largely spread sort of devices, sometimes of high value, this situation can be very harmful and there is a need to insure a right subscription to be downloaded in each device of the fleet.

Existing solution would be to get information from the operators in an exhaustive way about their roaming partners and about their RAT. With all these information, a database can be established and maintained to record such information. However, such a solution presents the disadvantage to be static and to rely on contacts with operators and their files and contracts.

Further alternative and advantageous solutions would, accordingly, be desirable in the art.

### SUMMARY OF THE INVENTION

The present invention aims at reducing or eliminating the risk of loading a subscription that will not work once deployed on each individual device.

The present invention is defined, in its broadest sense, as a method to select subscription to be loaded in an embedded Universal Integrated Circuit Card of an Internet of Things device among candidate subscriptions, said method comprising, for a central cloud intelligence, the steps of:
- collecting teaching data related to Mobile Network Operators' subscriptions and their associated favorite and/or forbidden PLMNs from on-field deployed Internet of Things' devices and/or from in-lab Internet of Things' devices hosting subscriptions' sample,
- associating, in a database, those teaching data to candidate subscriptions,
said method further comprising the steps of:
- receiving information relative to a radio environment of an Internet of Things device in need of a subscription,
- processing received information relative to the radio environment in regard to teaching data in the database and to candidate subscriptions,
- determining among the candidate subscriptions an adapted subscription depending on this processing,
- triggering the download of the determined subscription to the device in need of a subscription.

The principle of the invention is to teach a central cloud intelligence based on teaching data gathered from on-field and/or in-lab devices. Such on-field devices are typically deployed for production purpose and in-lab devices can be blueprint devices dedicated for running some experiences. It is here noted that the Mobile Network Operator, MNO in the following, are indifferently physical, and thus owning entirely their Public Land Mobile Network (PLMN) equipment, or virtual, i.e. Mobile Virtual Network Operators MVNO, using partially or completely the PLMN(s) of their Mobile Network Operator partners.

After the teaching of the cloud intelligence, as pre-requisite to determine the subscription, the central cloud intelligence then needs to be aware of the radio environment of each individual device. The radio environment is typically a list of PLMNs seen by the device with associated Radio Access Technology RAT, power strength and signal quality parameters. Such parameters are typically RSSI, RSCP, RSRP, ECN0, RS-SINR as defined in 3GPP standard.

This invention helps a central cloud intelligence responsible to dispatch MNO subscriptions into a fleet of cellular devices including an embedded Universal Integrated Circuit Card, eUICC in the following, with more relevance and efficiency. MNO have the habit to push into their SIM card their list of favorite and forbidden PLMNs. Such mechanism allows MNO to influence the PLMN selected by the device, as defined in 3GPP standard. The originality of this invention is to leverage such information by pulling them into a central cloud intelligence agnostic from any MNO so that a service provider using such central cloud intelligence can use them as teaching data for then downloading the most adapted MNO subscription into each of his device. In practice, it implements a kind of roaming partner map in a centralized and non-MNO dependent way. Then, such mechanism allows the service provider to maximize the relevance of his MNO subscription selection for each of his devices.

This invention helps through its teaching mechanism to make a complete fleet of devices benefitting from experience of just a few of them thanks to the adjustable teaching data gathering method.

According to an advantageous feature, the teaching data related to MNO subscriptions and their associated favorite and forbidden PLMNs include some standard 3GPP information to be read from the MNO profile in the eUICC.

The standard 3GPP information comprises:
- Home PLMN,
- Equivalent PLMN,
- Preferred PLMN,
- Forbidden PLMN.

They comprise Home PLMN, PLMNs which are equivalent to Home PLMN, preferred PLMNs, such a list being to be used as PLMN selector on a point of view of the operator and of the user, and forbidden PLMN.

According to an advantageous feature, the step of collecting teaching data is periodical.

With this feature, the server can decide to read the teaching data once on regular time interval, for example every month.

According to another feature, the step of collecting teaching data is done after a given number of regular successfully downloaded subscriptions into devices.

This feature enables a collection for example every 1000 devices successfully downloaded with same type of subscription.

According to another feature, the step of collecting teaching data is done after a network registration failure faced by an loT device, such a network registration failure conducting to update the Forbidden PLMN list of the concerned subscription in the embedded Universal Integrated Circuit Card of the loT device having failure.

This feature enables, when there is a failure in a device, an exemplary real-time update of the association between subscriptions and teaching data.

According to another feature, the step of collecting teaching data is done, from devices registered at a given Mobile Network Operator after a Subscriber Identity Module files update triggered by the given Mobile Network Operator.

This feature enables to take into account any kind of updates, including mass update, of eUICC having all subscriptions with a given Mobile Network Operator.

The step of collecting teaching data could be as well a combination of above features.

According to an advantageous feature, said method further comprises the step of, preliminary to collect teaching data:
- accessing a hash of the teaching data,
- comparing the received hash value to a previous one calculated with the lastly updated teaching data for a given subscription,
the step of collecting teaching data being triggered only in case the hash value is different from the previous one.

With this feature the use of hash mechanism avoids the cloud intelligence server to read the entire teaching data in case such teaching data are identified as being the same as some teaching data as previously downloaded.

With the above mentioned features, the invention proposes a dynamic way to create and maintain in the central cloud intelligence data base a MNO roaming partner map which is constituted with the teaching data and which frequently evolves. With short periodicity, it can indeed move quasi continuously. The invention thus offers a dynamic way to always select and download the most appropriate MNO subscription into each of the loT fleet devices.

According to a first embodiment, the step of receiving information relative to the radio environment of a device in need of a subscription, is preceded by a step of, for the device in need of a subscription, scanning the network frequencies to identify available PLMNs and associated RAT constituting the radio environment and a step of sending this information relative to the radio environment to the central cloud intelligence.

With this embodiment, a specific report from an individual device itself is produced with the help of the scanning. The information relative to the radio environment of the device as included in the report are then processed by the cloud intelligence and combined to the MNO roaming partner map to determine which is the best subscription to download for this specific device.

Advantageously and classically the radio environment can also include signal power and quality information associated to found PLMNs and associated RAT.

According to a second embodiment, the step of receiving information relative to the radio environment of a device in need of a subscription, is preceded by a step of, for a device companion of the device in need of a subscription, scanning the network frequencies to identify available PLMNs, associated RAT constituting the radio environment and a step of sending this information relative to the radio environment to the central cloud intelligence.

With this embodiment, a specific report is produced by a device companion closed to the targeted device. For example, it could be a smartphone with an application specific to the invention which is closed and paired to the loT device to be provisioned with a subscription.

The invention also relates to a cloud infrastructure having a central cloud intelligence to implement the method of the invention, said cloud infrastructure having connection to collect teaching data related to Mobile Network Operators' MNO subscriptions and their associated favorite and forbidden PLMNs from on-field deployed devices and/or from in-lab devices hosting subscriptions' sample,

said cloud infrastructure further having a processing module to associate, in a database, those teaching data to candidate subscriptions, in order to, when said cloud infrastructure receives information relative to a radio environment from an Internet of Things' device in need of a subscription, process received information relative to the radio environment in regard to teaching data in the data base and candidate subscriptions, to determine among the candidate subscriptions an adapted subscription depending on this processing, said cloud infrastructure then triggering the download of the determined subscription to the device in need of a subscription.

Such a cloud infrastructure implements the central cloud intelligence of the invention for managing the selection of subscriptions for fleet of devices in a reliable and relevant way. With the invention, the central cloud intelligence eliminates subscriptions that cannot fit and can, advantageously, also eliminate subscriptions at risk, i.e. when there is no explicit PLMN in the favorite list.

The invention also relates to an Internet of Things' device having an embedded Universal Integrated Circuit Card in which a candidate subscription is to be downloaded, said device having a cellular module or chipset supporting network scan or being connectable to a device companion, the cellular module or chipset supporting network scan or the device companion being adapted to scan the network frequencies to identify available PLMNs and associated RAT constituting a radio environment, said device further having a transmission/reception cellular module or chipset to send this information relative to its radio environment to a central cloud intelligence of the invention and to receive a downloaded subscription.

The invention thus concerns "chip-on-board" solution as well. It thus also concern loT's devices using directly chipsets without a cellular module.

Such device is thus provided with a subscription adapted to its radio environment. The risk to download a wrong subscription is thus reduced.

Advantageously, the device further has an agent software to read, in the embedded Universal Integrated Circuit Card, teaching data related to Mobile Network Operators' subscriptions and their associated favorite and forbidden PLMNs and to send the read teaching data to the central cloud intelligence.

With such an agent software, the device is adapted to feed the central cloud intelligence with further teaching data on a periodical or regular base. It rends dynamic the database in the central cloud intelligence. It is particularly valuable because the MNO roaming partner map is painful to establish manually and mostly impossible to maintain due to its high update cadence.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents the context of the invention;
- Figure 2 schematically shows the general functioning of method of the invention;
- Figure 3 shows a time diagram illustrating the collection of experiences according to the invention;
- Figure 4 illustrates the use of the invention to select a subscription; and
- Figures 5A and 5B shows two options of implementation of the subscription selection method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

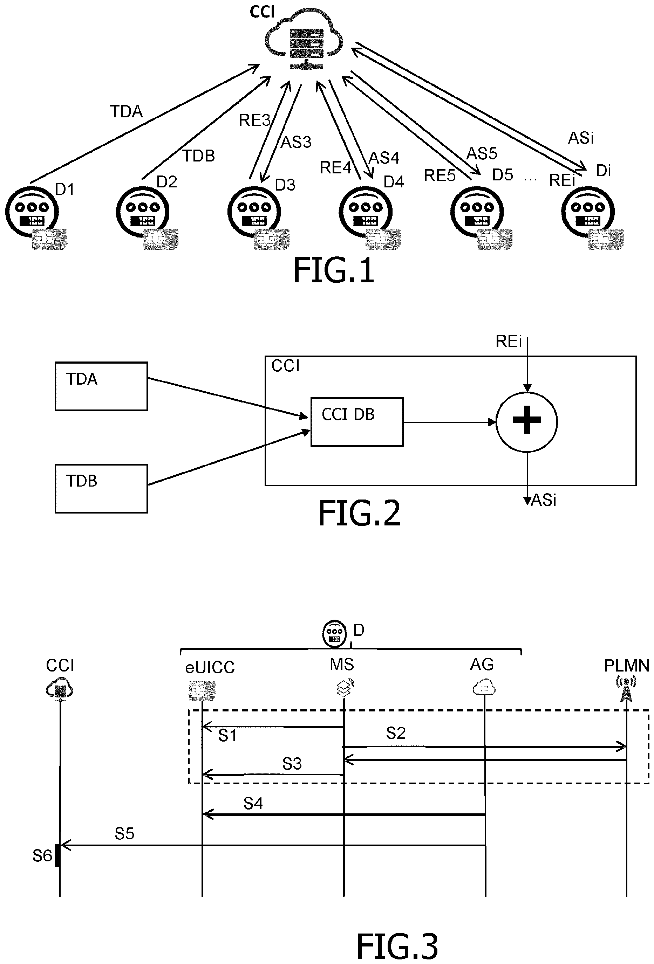

Figure 1 schematically shows an environment where the invention is exemplarily implemented. The invention relates to a central cloud intelligence CCI implemented in at least one server connected to several devices D1 to Di.

Among those several devices, at least two, here D1 and D2, respectively loaded with a subscription from a Mobile Network Operator A, MNO A in the following, and loaded with a subscription from a Mobile Network Operator B, MNO B in the following, have thus sent teaching data TDA and TDB to the central cloud intelligence CCI. The teaching data TDA, TDB are information related to a subscription: Home PLMN, Equivalent PLMN, etc... and their associated RAT if applicable. Such information are classically found in the files of the SIM card.

This is also illustrated on figure 2 where teaching data TDA and TDB coming from devices loaded with different subscription from MNO A and B, have sent their teaching data to the central cloud intelligence CCI. The teaching data TDA and TDB are stored in a central cloud intelligence database CCI DB of the central cloud intelligence CCI associated with candidate subscriptions. Then, the CCI DB contains a kind of up-to-date roaming partner map including list of favorite and forbidden PLMNs for the subscriptions from MNO A and B.

The devices D3 to Di are devices placed in various radio environments RE3 to REi that are scanned by each device D3 to Di. The scanned radio environment REi is an information then provided to the central cloud intelligence CCI as schematically shown on figure 1 and figure 2.

Then the radio environment REi for each of the devices is used by the central cloud intelligence CCI and combined with the database CCI DB to determine adapted subscriptions AS3 to ASi to be respectively downloaded in the devices D3 to Di as illustrated on figure 2.

In an advantageous implementation of the invention, all devices D1 to Di are then used to further feed the central cloud intelligence CCI with updated data that constitutes further teaching data TD1 to TDi.

Figure 3 shows a time diagram of the learning phase by the central cloud intelligence CCI. The device D which participates to the feeding of the central cloud intelligence CCI comprises at least a cellular module or chipset and an embedded Universal Integrated Circuit Card eUICC, which has to be provisioned with a subscription. Based on such subscription, the device D selects a Public Land Mobile Network PLMN and executes an attachment procedure on it. Here, for the need of the learning phase of the central cloud intelligence CCI, a subscription is already present in the eUICC. The devices D, on-field or in-lab, has access to information stored in the concerned SIM profile(s) installed in the eUICC. An agent software AG running on the device D can read the list of favorite and forbidden PLMNs associated to the subscription and transmit such teaching data to the central cloud intelligence CCI.

The device further comprises a modem stack MS as interface between the eUICC and the PLMN. Such PLMN can be a Home PLMN where the device D is attached to the network belonging to the issuer of the subscription or a visited PLMN in case the device is in a roaming situation.

The agent software AG is further connected to the central cloud intelligence CCI and processes information relative to the invention.

In a first step S1, the modem stack MS reads in the module eUICC the subscription that is stored there and accesses to PLMN lists, i.e. listing forbidden PLMN, preferred PLMN, Home PLMN. Using such lists, the modem stack MS selects the most appropriate PLMN and proceed to an attachment procedure in a step S2. In case of failure with specific cause, the selected PLMN can be declared as "forbidden" and the modem stack MS will update accordingly the list of PLMNs in the eUICC profile and restart a PLMN selection and attachment procedure with other available PLMN. In such a case, the eUICC profile in this device D contains some new useful information that will become new teaching data for the CCI in next steps. Such an update can also be performed with other lists of PLMN as known by the eUICC.

The successive attachment procedure(s) of the device D to the different PLMNs indeed leads to an update in the SIM PLMN lists, which constitute teaching data TD for the invention. The procedure in dashed line is thus an example of procedure conducting to an update of PLMN lists.

Then the agent AG reads the updated PLMN lists in a step S4, these updated PLMN lists being teaching data TD and sends, in a step S5, the updated PLMN lists related to active eUICC subscription to the central cloud intelligence CCI. The central cloud intelligence CCI then stores these lists in association with the type of subscription of the corresponding device in the database CCI DB in a step S6.

According to the invention, the central cloud intelligence CCI may read such information from the device at different points of time depending on the implementation. Such reading can be done at the first time a new type of subscription is installed in an eUICC of the device fleet. Optionally a hash mechanism could be put in place to allow the server to avoid reading several times the same teaching data TD exposed by the same device D in further later readings or exposed by different devices D for the same type of subscription during the Device Di step 5.In such a case, it is advantageous, for the server, to first systematically read the hash in order for the server to decide to read the complete teaching data TD related to the subscription(s) or not.

The server may thus decide to read the teaching data once on regular time interval, e.g. read every month, or/and once on regular successful subscription downloaded into a device, e.g. read every 1000 successful downloads.

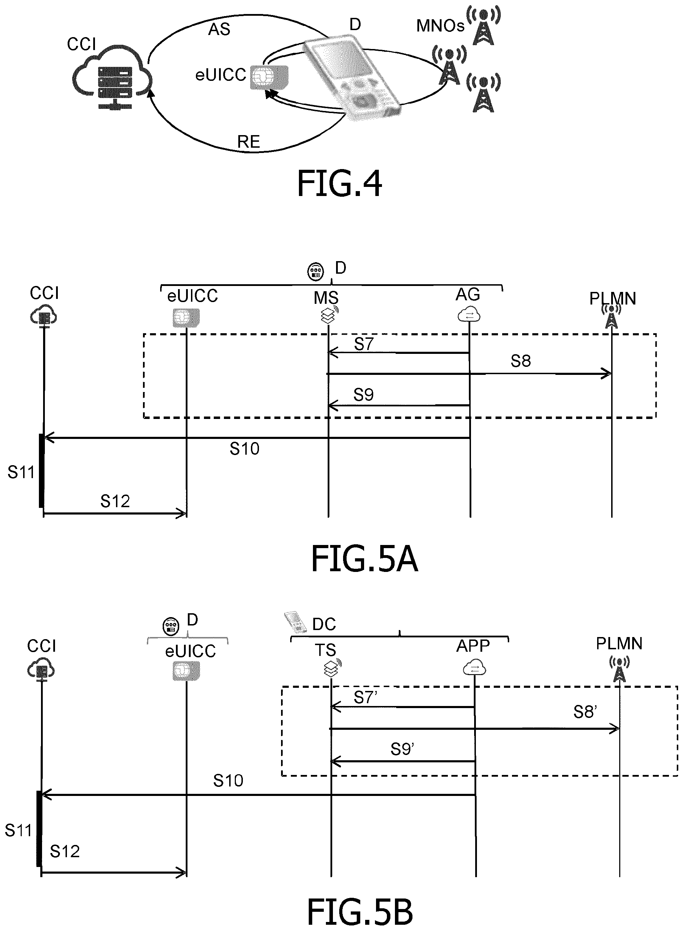

The invention thus enables to leverage a same PLMN list as the one used by the modem stack of the device D during 3GPP PLMN selection. It is illustrated on figure 4.

According to the invention, such a device D performs a scan of the radio environment RE which results in a list of available PLMN, RAT, power strength and signal quality parameters. This scan enables the device D to know the active frequencies.

Such a scan of the radio environment RE can be done according two options that are illustrated on figures 5A and 5B.

In the first case the device D is independent and proceed itself to the radio environment scanning. According to the invention, the agent AG request the modem stack MS to start an informal network scan in a step S7.

The informal scan is illustrated by a step S8 where the available PLMNs, RAT, power strength and signal quality parameters are listed.

Then, in a step S9, the agent AG reads the radio environment RE as established in step S8. This is an example of procedure to acquire radio environment RE of each individual device, which needs a subscription to be downloaded. It enables the agent AG to send the radio environment RE to the central cloud intelligence CCI as shown on figure 4.

In a step S11, the central cloud intelligence CCI then processes the information relative to the radio environment RE with the teaching data TD as stored in the subscription database CCI DB associated with candidate subscriptions. In this step S11, the central cloud intelligence CCI compares the list of available PLMNs/RAT seen by the device and the list of PLMNs/RAT compatible with the candidate subscriptions. The central cloud intelligence CCI then eliminates subscriptions that cannot fit, such as the ones for which all PLMNs/RAT seen by the device are classified as forbidden PLMN for the concerned candidate subscription according to the subscription database CCI DB. The central cloud intelligence CCI then may eliminate subscriptions that could represent a risk of not fitting, such as the ones for which all PLMNs/RAT seen by the device are not explicitly listed in the list of favorite PLMNs, i.e. Home PLMN, Equivalent PLMN, Preferred PLMN, for the concerned candidate subscription according to the subscription database CCI DB. The central cloud intelligence CCI then selects the best subscriptions among the remaining ones, based on some criteria of his choice such as best signal strength, best price... At last, in a step S12, the selected subscription AS is downloaded in the module eUICC of the device D.

Figure 5B illustrates a second option of implementation of the invention where the device D is not most appropriate equipment to perform a scan of the frequency and then not candidate to determine the radio environment RE. For example, the device D is a meter. It thus rely on another device companion DC to perform the network analysis through network scanning. Typically a smartphone with an installed application APP is thus dedicated to the device D management or at least to the device D activation. This smartphone is a device companion DC having a telecom stack TS.

In a step S7', the application APP requests the telecom stack TS to perform a network scanning which is performed in a step S8' by the telecom stack TS. Then, in a step S9', the application APP reads the radio environment listing the available PLMNs,RATs, power strength and signal quality parameters in the telecom stack TS. This is an example of procedure to acquire radio environment RE of each individual device leveraging a device companion DC.

Then the application APP is able to provide the radio environment RE, as shown on figure 3, to the central cloud intelligence CCI in the step S10. It triggers the determination, by the central cloud intelligence CCI, using the teaching data stored in database CCI DB, of the best subscription AS regarding to the radio environment RE in step S11. It then triggers the downloading of the subscription AS in device D in step S12.

Thus, according to the invention, one or few devices are collecting inputs including Home PLMN, PLMNs which are equivalent to Home PLMN, Preferred PLMN which enables a PLMN selection and Forbidden PLMN, from eUICC hosting one sample of the candidate subscriptions. This or these devices are sending such inputs to a central cloud intelligence CCI in charge of dispatching/distributing the MNO subscriptions, whatever this provisioning is performed in push or pull mode. The central cloud intelligence CCI thus teaches a subscription selection algorithm to be more relevant in its subscription choice for the rest of the device fleet such as:
- do not select a subscription if the PLMNs seen by the concerned device are in the Forbidden PLMN list;
- select a subscription where Equivalent PLMN is identified in the PLMNs seen by the concerned device;
- select a subscription where Preferred PLMN is identified in the PLMNs seen by the concerned device.

Such an algorithm takes the teaching data TD in the database CCI DB as a basis to know if a subscription is adapted to a device having a specific radio environment RE or if this subscription is not adapted. For example, the algorithm put aside any subscription for an MNO of which no PLMN appears in the radio environment RE of the device to be provisioned with a subscription. It avoids mistaken subscription downloading in device having no corresponding network in its radio environment RE.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to select subscription to be loaded in an embedded Universal Integrated Circuit Card of an Internet of Things device among candidate subscriptions, said method comprising, for a central cloud intelligence, the steps of:
- collecting teaching data related to Mobile Network Operators' subscriptions and their associated favorite and/or forbidden PLMNs from on-field deployed Internet of Things' devices and/or from in-lab Internet of Things' devices hosting subscriptions' sample,
- associating, in a database, those teaching data to candidate subscriptions,
said method further comprising the steps of:
- receiving information relative to a radio environment of an Internet of Things device in need of a subscription,
- processing received information relative to the radio environment in regard to teaching data in the database and to candidate subscriptions,
- determining among the candidate subscriptions an adapted subscription depending on this processing,
- triggering the download of the determined subscription to the device in need of a subscription.

2. Method according to claim 1, wherein the teaching data related to Mobile Network Operators' Subscription and their associated favorite and forbidden PLMNs include some standard 3GPP information to be read from the Mobile Network Operator's profile in the embedded Universal Integrated Circuit Card.

3. Method according to claim 2, wherein the standard 3GPP information comprises at least:
- Home PLMN,
- Equivalent PLMN,
- Preferred PLMN,
- Forbidden PLMN.

4. Method according to one of claims 1 to 3, wherein the step of collecting teaching data is periodical.

5. Method according to one of preceding claims, wherein the step of collecting teaching data is done after a given number of regular successfully downloaded subscriptions into devices.

6. Method according to one of preceding claims, wherein the step of collecting teaching data is done after a network registration failure faced by an loT device, such a network registration failure conducting to an update the Forbidden PLMN list of the concerned subscription in the embedded Universal Integrated Circuit Card of the loT device having failure.

7. Method according to one of preceding claims, wherein the step of collecting teaching data is done, from devices registered at a given Mobile Network Operator after a Subscriber Identity Module files update triggered by the given Mobile Network Operator.

8. Method according to one of preceding claims 4 to 7, said method further comprising the step of, preliminary to collect teaching data:
- accessing a hash of the teaching data,
- comparing the received hash value to a previous one calculated with the lastly updated teaching data for a given subscription,
the step of collecting teaching data being triggered only in case the hash value is different from the previous one.

9. Method according to one of preceding claims, wherein the step of receiving information relative to the radio environment of a device in need of a subscription, is preceded by a step of, for the device in need of a subscription, scanning the network frequencies to identify available PLMNs and associated RAT constituting the radio environment and a step of sending this information relative to the radio environment to the central cloud intelligence.

10. Method according to one of claims 1 to 8, wherein the step of receiving information relative to the radio environment of a device in need of a subscription, is preceded by a step of, for a device companion of the device in need of a subscription, scanning the network frequencies to identify available PLMNs and associated RAT constituting the radio environment and a step of sending this information relative to the radio environment to the central cloud intelligence.

11. Cloud infrastructure having a central cloud intelligence to implement the method of one of claims 1 to 10, said cloud infrastructure having connection to collect teaching data related to Mobile Network Operators' subscriptions and their associated favorite and forbidden PLMNs from on-field deployed devices and/or from in-lab devices hosting subscriptions' sample,
said cloud infrastructure further having a processing module to associate, in a database, those teaching data to candidate subscriptions, in order to, when said cloud infrastructure receives information relative to a radio environment from an Internet of Things' device in need of a subscription, process received information relative to the radio environment in regard to teaching data in the data base and candidate subscriptions, to determine among the candidate subscriptions an adapted subscription depending on this processing, said cloud infrastructure then triggering the download of the determined subscription to the device in need of a subscription.

12. Internet of Things' device having an embedded Universal Integrated Circuit Card in which a candidate subscription is to be downloaded, said device having a cellular module or chipset supporting network scan, or being connectable to a device companion, the cellular module or chipset supporting network scan or the device companion being adapted to scan the network frequencies to identify available PLMNs and associated RAT constituting a radio environment, said device further having a transmission/reception cellular module or chipset to send this information relative to its radio environment to a central cloud intelligence of claims 11 and to receive a downloaded subscription.

13. Internet of Things' device according to claim 12, further having an agent software to read, in the embedded Universal Integrated Circuit Card, teaching data related to Mobile Network Operators' subscriptions and their associated favorite and forbidden PLMNs and to send the read teaching data to the central cloud intelligence.
